# EUROPEAN PATENT SPECIFICATION

(11) **EP 2 594 742 B1**
(45) Date of publication and mention of the grant of the patent: **04.01.2017**
(21) Application number: 11189637.9
(22) Date of filing: 17.11.2011
(51) Int. Cl.: F01D 9/04, F01D 21/04

(54) **Low cost containment ring**
Kostengünstige Berstschutzring
Anneau de rétention à faible coût

(43) Date of publication of application: 22.05.2013
(73) Proprietor: Hamilton Sundstrand Corporation, Windsor Locks, CT 06096-1010 (US)
(72) Inventor: Izadi, Said, San Diego, CA California 92131 (US); Skarzynski, Bohdan, San Diego, CA California 92123 (US)
(74) Representative: Hall, Matthew Benjamin

(56) References cited:
- EP-A1- 0 027 756
- EP-A2- 1 726 787
- GB-A- 2 159 886
- GB-A- 2 281 941
- GB-A- 2 422 407
- GB-A- 2 442 112
- US-A1- 2004 211 167
- US-A1- 2010 150 696

## Description

### BACKGROUND OF THE INVENTION

This invention relates to turbine engines having bladed rotors and particularly to a containment case for confining high energy debris formed as a product of rotor blade failure, or fragments from a disk and impeller which may fail during engine operation.

Gas turbine engines, such as those which power commercial aircraft, typically include a fan, a bladed compressor and other compressors, turbine disks, and turbine blades. Each blade array comprises a multitude of blades that are attached to and extend radially outwardly from a hub. During engine operation each hub and associated blade array rotate about a longitudinally extending central axis. A nonrotating case, which is typically cylindrical or frustoconical in shape, circumscribes the tips of the blades and is radially spaced therefrom by a small amount.

During engine operation, it is possible for a fragment of a fan, compressor or turbine disk, or turbine and turbine blade to crack and become separated. Separation of a fragment is rare and is usually attributable to failure of a component. Because the kinetic energy of separated fragment is considerable (particularly if the fragment comprises substantially the part of the disk/compressor) the fragment is capable of damaging engine and aircraft components which lie along the fragment's trajectory. To prevent such damage, the case which circumscribes a blade array is designed to confine or contain a fragment and is commonly referred to as a containment case.

One type of containment case is known as a soft wall case (see for example, GB 2442112, EP 1726787, GB 2281941, or EP 0027756). A soft wall case comprises multiple layers of a light weight penetration resistant fabric wrapped around a rigid but penetrable support ring. A separated fragment will penetrate the support ring but will be contained by the fabric. Soft wall construction is expensive, but is also light weight, a distinct advantage in an aircraft application. A second type of case, known as a hard wall case, comprises a ring having sufficient radial thickness to resist penetration by separated fragments. The choice of hard wall or soft wall construction depends largely on the case diameter and the temperature. For a large diameter case, hard wall construction is prohibitively heavy, and therefore soft wall construction, despite being expensive, is preferred. For a small diameter case, the radial thickness required for penetration resistance imposes only a modest weight penalty and so the less expensive hard wall construction is usually favored.

Although hard wall construction is almost universally preferred for small diameter cases, it is not without several disadvantages. First, the thickness and rigidity of a hard wall case prevent it from deflecting readily when struck by a separated fragment. Consequently, the full force of the impact is concentrated over a very short time interval and therefore is quite damaging. The abruptness and resultant severity of the impact contribute to the required thickness of the case and therefore to its weight. In addition, the severe impact energy is transmitted to auxiliary components, such as engine control units and pneumatic lines which may be attached to the exterior of the engine (and especially to the exterior of the containment case), thereby exposing those components to potentially damaging forces.

A second disadvantage of a conventional hard wall containment case is that it is typically machined from forgings, which adds cost to the containment ring.

### SUMMARY OF THE INVENTION

Viewed from a first aspect, the present invention provides a containment case for a turbine engine having a plurality of blades rotating therein, said containment case comprising: a first plurality of relatively high strength metallic layers, each of said first plurality of layers being resistant to penetration of fragments therethrough; and a second plurality of relatively ductile metallic layers, each of said second plurality of layers being configured to absorb kinetic energy of fragments striking said second plurality of layers, wherein said first plurality of metallic layers and said second plurality of metallic layers are interleaved with each other.

Viewed from a second aspect, the present invention provides a method for mounting layers that resist penetration of a blade or part thereof therethrough and absorb the kinetic energy thereof, said method comprising: providing a first plurality relatively high strength of metallic layers, each of said first plurality of layers being resistant to penetration of blades therethrough; and interleaving a second plurality of relatively ductile metallic layers with said first plurality of metallic layers, each of said second plurality of layers absorbing kinetic energy of blades striking any one of said second plurality of layers.

These advantages and the features and operation of the invention will become more apparent in light of the following description of the best mode for carrying out the invention and the accompanying drawings.

### BRIEF DESCRIPTION OF THE DRAWINGS

FIG. 1 is a schematic, cross sectional side view of an aircraft gas turbine engine.
FIG. 2 is a cross sectional side view of an embodiment of a containment device used in the aircraft gas turbine engine of FIG. 1.
FIG. 3 is a cross sectional front view of the containment device of FIG. 2.
FIG. 4 is a perspective view of the containment device of FIG. 2.
FIG. 5 shows an embodiment method of constructing the containment device of FIG. 4
FIG. 6 shows a further embodiment method of constructing the containment device of FIG. 4
FIG. 7 shows an embodiment method of constructing the engine of FIG. 1.

### DETAILED DESCRIPTION OF THE PREFERRED EMBODIMENT

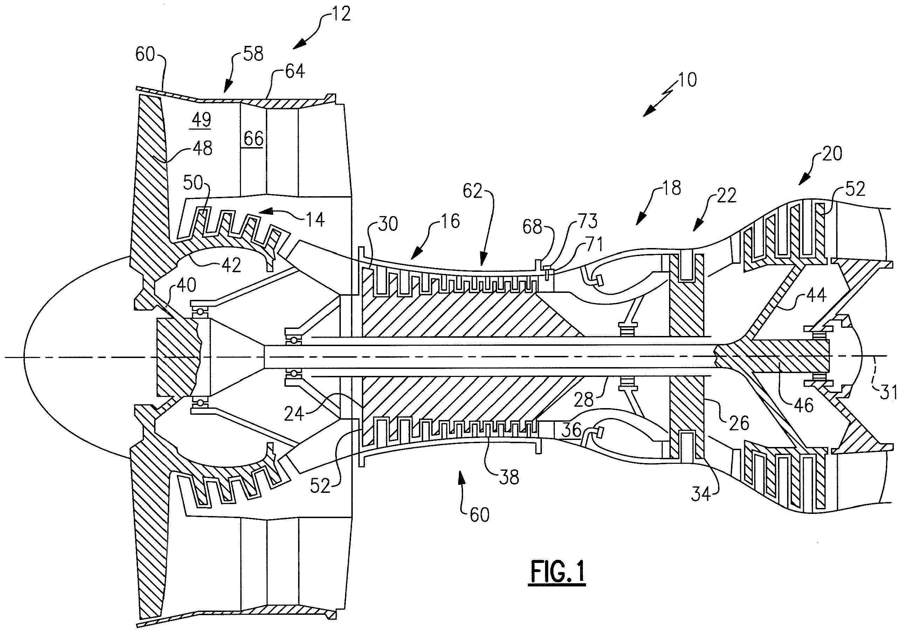

Referring to FIG. 1, an aircraft gas turbine engine 10 includes a fan 12, low pressure and high pressure compressors 14, 16, a combustion chamber 18, and low pressure and high pressure turbines 20, 22. The gas turbine engine 10 may be a main engine or incorporated in an auxiliary power unit of an aircraft. A high pressure rotor comprises a high pressure compressor hub 24 and a high pressure turbine hub 26 connected together by a shaft 28. The blades 30 and 34 extend radially outwardly from their respective hubs, across a primary flow path 36, and into close proximity with a primary or core case assembly 38. Similarly a low pressure rotor comprises fan, low pressure compressor and low pressure turbine hubs 40, 42, 44 connected together by shaft 46 and arrays of blades such as representative fan, low pressure compressor and low pressure turbine blades 48, 50, 52. Blades 48, 50, 52, extend radially outwardly from their respective hubs, across the primary flow path and, in the case of the fan blades 48, across a secondary flow path 49 as well, and into close proximity with the core case assembly 38, or a fan case assembly 58. The case assemblies define the outer flow path boundaries for the primary and secondary flow paths.

During engine operation, the turbines drive the fan and compressors about a longitudinally extending central axis 31. Since a fragment (not shown) may become separated from the rotor during engine operation, a containment case 60 has a particular structure, as will be discussed infra, to contain such a fragment. If a fragment, e.g., such as blade 52 or a fragment (not shown) thereof, breaks loose, that blade 52 or fragment has ballistic properties like a bullet and the containment case 60 deals with, as will be discussed infra, the penetration aspects associated with those ballistic properties. The case assembly 60 then absorbs the kinetic energy of the blade 52 to prevent the fragment from escaping.

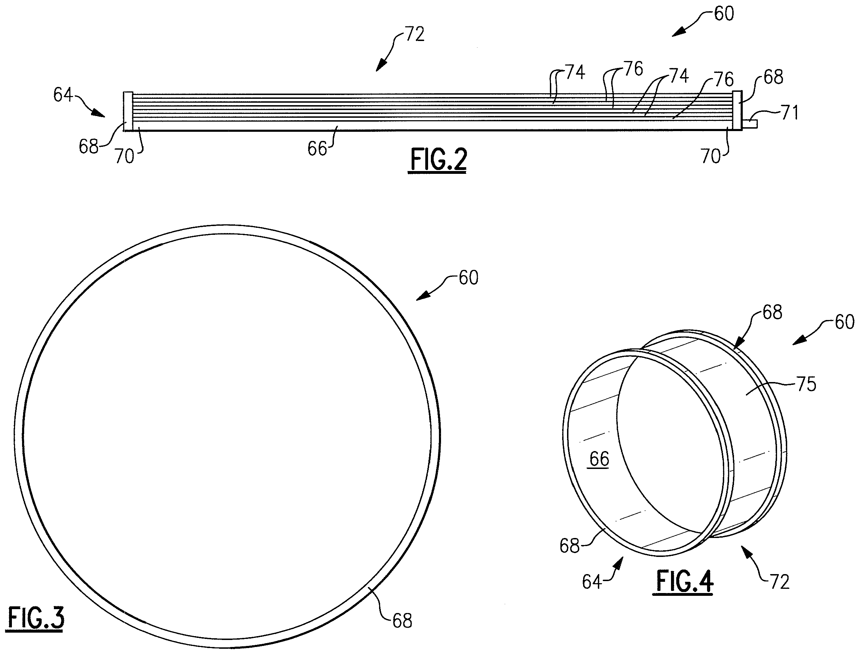

Referring to FIGS. 1-4, containment case 60 circumscribes an array of fan blades 52 as shown in Fig. 1. The containment case has an impact zone 62 that is a region where separated fragments may strike the containment case. The containment case 60 includes: a spool 64 that has a base 66, shown as cylindrical in FIGs 2-6, and a pair of rings 68 attached, by brazing or the like, to and extending from each end 70 of the cylindrical base 66 to define the spool 64; and a plurality of layers 72 disposed around the spool 64 between the rings 68. Each ring 68 has a flange 71 or the like through which a bolt 73 attaches the containment case 60 to the core case assembly 38 (see FIG. 1). The base 66 may also be contoured to adapt to the surface of a core case assembly 38 or the like.

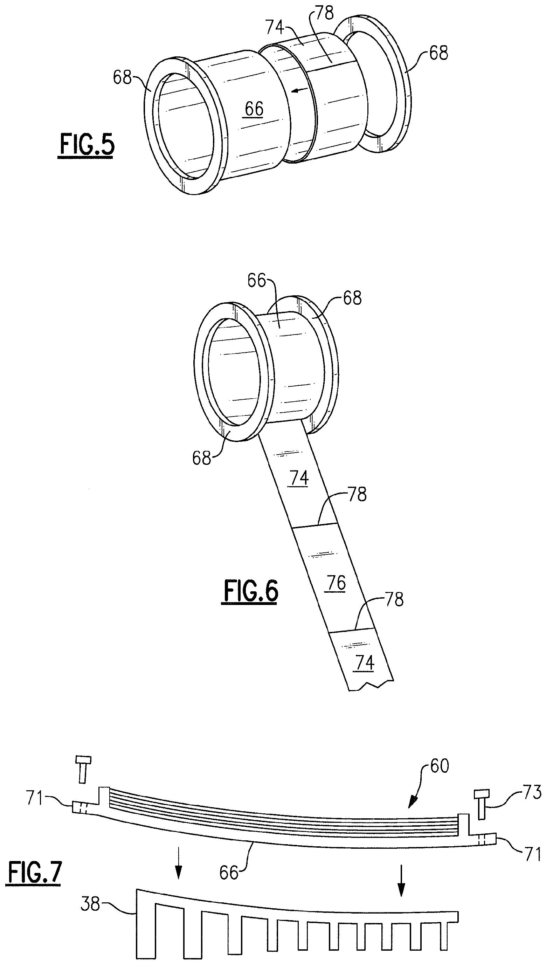

To attach the containment case 60 to the engine 10 (see FIG. 7), the containment case 60 is slid over the core case assembly 38 during construction of the engine 10 and bolted via bolts 73 through flange 71 to the core case assembly 38. Other attachment methods may be used such as welding or brazing or the like.

The spool 64 including cylindrical base 66, rings 68 and flange 71 is constructed of stainless steel or the like. The layers 72 are made up of a relatively high strength metallic layers 74 such as Inconel® 718, steel or others that address the ballistic penetrative properties of a separated fragment, such as blade 52, or a fragment thereof, and relatively ductile metallic layers 76, such as Inconel® 625, steel or others to absorb the kinetic energy of a separated fragment, such as blade 52, or a fragment thereof. Each layer 74 is between about 0.1 inches (or 2.5 mm) and .01 inches (or 0.3 mm) thick and each layer 76 is similarly between about 0.1 inches (or 2.5 mm) and .01 inches (or 0.3 mm) thick, though different thicknesses may be used for different applications and other materials.

The layers 74, 76 are interleaved (see FIG. 2). Each layer 74, 76 may be attached by butt welding (see line 78 in FIGS. 4-6) or the like to itself to form a strip upon the spool 64 or attached to itself and slid on the cylindrical base 66 and any already applied layer 74, 76, before a ring 68 is attached to the cylindrical base 66. Each subsequent layer 74, 76 gets larger in diameter. Additionally a layer 74 or 76 may be attached to an adjacent layer 74 or 76, welded to the cylindrical base 66 and rolled or coiled up upon the spool 64. The last layer 74, 76 is then attached to the rest of the spooled layers 74, 76.

In the event that a separated fragment strikes the containment case during engine operation, the containment case 60 contains the fragment, owing to its layers 74 that primarily resist the penetration of the separated fragment, and the layers 76 that primarily absorb the energy of the separated fragment thereof.

The invention has been described as a containment case for an array of compressor blades 52 and hub 24 in a turbine engine 10. However the invention is equally applicable to the fan 48 and turbine blade 52 arrays and a hub 26 and 44 of a turbine engine and to any other type of machinery where it is desirable to confine separated component fragments.

The preceding description is exemplary rather than limiting in nature. Variations and modifications to the disclosed examples may become apparent to those skilled in the art that do not necessarily depart from the scope of this invention, which is defined by the claims. The scope of legal protection given to this invention can only be determined by studying the following claims.

## Claims

1. A containment case (60) for a turbine engine having a plurality of blades (48,50,52) rotating therein, said containment case comprising:
a first plurality of relatively high strength metallic layers (74), each of said first plurality of layers being resistant to penetration of fragments therethrough; and
a second plurality of relatively ductile metallic layers (76), each of said second plurality of layers being configured to absorb kinetic energy of fragments striking said second plurality of layers,
wherein said first plurality of metallic layers and said second plurality of metallic layers are interleaved with each other.

2. The containment case of claim 1, further comprising a base (66) upon which said first and second plurality of layers are disposed.

3. The containment case of claim 2, further comprising a first ring (68) disposed upon a first end (70) of said base upon which said first and second plurality of layers are disposed; preferably
further comprising a second ring (68) disposed upon a second end (70) of said base upon which said first and second plurality of layers are disposed such that said base and said first and second rings form a spool.

4. The containment case of any preceding claim further comprising a casing within which blades rotate and which said first and second layers are disposed thereabout.

5. The containment case of any preceding claim wherein each layer of said first and second plurality of layers is between 0.3 mm and 2.5 mm thick.

6. A method for mounting layers (72) that resist penetration of a blade (48,50,52) or part thereof therethrough and absorb the kinetic energy thereof, said method comprising:
providing a first plurality relatively high strength of metallic layers (74), each of said first plurality of layers being resistant to penetration of blades therethrough; and
interleaving a second plurality of relatively ductile metallic layers (76) with said first plurality of metallic layers, each of said second plurality of layers absorbing kinetic energy of blades striking any one of said second plurality of layers.

7. The method of claim 6 further comprising:
providing a base (66) upon which said first plurality of metallic layers and said second plurality of metallic layers are disposed.

8. The method of claim 7 further comprising:
attaching each of said first plurality of metallic layers and each of said second plurality of metallic layers to itself to form a ring and placing said ring on said base;

9. The method of claim 7 further comprising:
attaching a first end of each of said first plurality of metallic layers and said second plurality of metallic layers to a second end thereof to form a ring on said base.

10. The method of claim 7 further comprising providing a first ring (68) on a first end (70) of said base; preferably
further comprising:
attaching each of said first plurality of metallic layers and said second plurality of metallic layers to itself to form a ring; and
placing said ring on said base in proximity to said first ring; and more preferably
further comprising:
placing a second ring (68) on a second end of said base such that said base and said first and second ring form a spool (64).

11. The method of claim 7 further comprising:
attaching a first end of one of said first plurality of metallic layers and said second plurality of metallic layers to a second end of another of said first plurality of metallic layers and said second plurality of metallic layers to form a strip; and
coiling said strip upon said base.

12. The method of claim 11 further comprising attaching a first end of said strip to said base; preferably
further comprising attaching a second end of said strip to said base.

13. A method of mounting a containment ring upon a portion of an engine (10) within which a rotating blade that may break or fragment is disposed, comprising:
mounting layers by a method as claimed in any of claims 6 to 12; and
disposing said first plurality of metallic layers and said second plurality of metallic layers about said portion.

14. The method of claim 13 further comprising anchoring said first plurality of metallic layers and said second plurality of metallic layers to said portion.

15. The method of claim 13 or 14 further comprising:
disposing said first plurality of metallic layers and said second plurality of metallic layers in a spool (64); and
anchoring said spool to said portion.

## Patentansprüche

1. Einschlussgehäuse (60) für ein Turbinentriebwerk mit einer Vielzahl von sich darin drehenden Schaufeln (48, 50, 52), wobei das Einschlussgehäuse Folgendes umfasst:
eine erste Vielzahl von verhältnismäßig hochfesten metallischen Schichten (74), wobei jede aus der ersten Vielzahl von Schichten gegen das Durchdringen von Fragmenten durch sie resistent ist; und
eine zweite Vielzahl von relativ dehnbaren metallischen Schichten (76), wobei jede aus der Vielzahl von Schichten dafür konfiguriert ist, kinetische Energie von auf die zweite Vielzahl von Schichten treffenden Fragmenten zu absorbieren,
wobei die erste Vielzahl metallischer Schichten und die zweite Vielzahl metallischer Schichten miteinander verschränkt sind.

2. Einschlussgehäuse nach Anspruch 1, weiter umfassend eine Basis (66), auf der die erste und zweite Vielzahl von Schichten angeordnet sind.

3. Einschlussgehäuse nach Anspruch 2, weiter umfassend einen ersten Ring (68), der auf einem ersten Ende (70) der Basis angebracht ist, auf der die erste und zweite Vielzahl von Schichten angebracht sind; bevorzugt
weiter umfassend einen zweiten Ring (68), der auf einem zweiten Ende (70) der Basis angebracht ist, auf der die erste und zweite Vielzahl von Schichten angebracht sind, so dass die Basis und der erste und zweite Ring eine Spule bilden.

4. Einschlussgehäuse nach einem der vorhergehenden Ansprüche, weiter umfassend eine Verkleidung, in welcher sich Schaufeln drehen und um welche erste und zweite Schichten angeordnet sind.

5. Einschlussgehäuse nach einem der vorhergehenden Ansprüche, wobei jede Schicht aus der ersten und zweiten Vielzahl an Schichten zwischen 0,3 mm und 2,5 mm dick ist.

6. Verfahren zum Montieren von Schichten (72), die dem Eindringen einer Schaufel (48, 50, 52) oder einem Teil davon durch sie wiederstehen und die kinetische Energie davon absorbieren, wobei das Verfahren Folgendes umfasst:
Bereitstellen einer ersten Vielzahl von verhältnismäßig hochfesten metallischen Schichten (74), wobei jede aus der Vielzahl der metallischen Schichten einem Durchdringen von Schaufeln durch sie widersteht; und
Verschränken einer zweiten Vielzahl von relativ dehnbaren metallischen Schichten (76) mit der ersten Vielzahl metallischer Schichten, wobei jede aus der zweiten Vielzahl von Schichten kinetische Energie von Schaufeln absorbiert, die eine beliebige aus der zweiten Vielzahl von Schichten treffen.

7. Verfahren nach Anspruch 6, weiter umfassend:
Bereitstellen einer Basis (66), auf der die erste Vielzahl metallischer Schichten und die zweite Vielzahl metallischer Schichten angebracht sind.

8. Verfahren nach Anspruch 7, weiter umfassend:
Befestigen jeder aus der ersten Vielzahl metallischer Schichten und jeder aus der zweiten Vielzahl metallischer Schichten an sich selbst, um einen Ring zu bilden, und Platzieren des Rings auf der Basis.

9. Verfahren nach Anspruch 7, weiter umfassend:
Befestigen eines ersten Endes jeder aus der ersten Vielzahl metallischer Schichten und der zweiten Vielzahl metallischer Schichten an einem zweiten Ende davon, um einen Ring auf der Basis zu bilden.

10. Verfahren nach Anspruch 7, weiter umfassend das Bereitstellen eines ersten Rings (68) auf einem ersten Ende (70) der Basis; bevorzugt
weiter umfassend:
Befestigen jeder aus der ersten Vielzahl metallischer Schichten und der zweiten Vielzahl metallischer Schichten an sich selbst, um einen Ring zu bilden; und
Platzieren des Rings auf der Basis in der Nähe des ersten Rings; und bevorzugter weiter umfassend:
Platzieren eines zweiten Rings (68) auf einem zweiten Ende der Basis, so dass die Basis und der erste und der zweite Ring eine Spule (64) bilden.

11. Verfahren nach Anspruch 7, weiter umfassend:
Befestigen eines ersten Endes von einer aus der ersten Vielzahl metallischer Schichten und der zweiten Vielzahl metallischer Schichten an einem zweiten Ende einer weiteren aus der ersten Vielzahl metallischer Schichten und der zweiten Vielzahl metallischer Schichten, um eine Leiste zu bilden; und
Wickeln der Leiste auf die Basis.

12. Verfahren nach Anspruch 11, weiter umfassend das Befestigen eines ersten Endes der Leiste an der Basis; bevorzugt
weiter umfassend das Befestigen eines zweiten Endes der Leiste an der Basis.

13. Verfahren zum Montieren eines Einschlussrings auf einem Abschnitt eines Triebwerks (10), innerhalb welchem eine sich drehende Schaufel angebracht ist, die brechen oder fragmentieren kann, umfassend:
Montieren von Schichten durch ein Verfahren nach einem der Ansprüche 6 bis 12; und
Anbringen der ersten Vielzahl metallischer Schichten und der zweiten Vielzahl metallischer Schichten um den Abschnitt.

14. Verfahren nach Anspruch 13, weiter umfassend das Verankern der ersten Vielzahl metallischer Schichten und der zweiten Vielzahl metallischer Schichten an dem Abschnitt.

15. Verfahren nach Anspruch 13 oder 14, umfassend:
Anbringen der ersten Vielzahl metallischer Schichten und der zweiten Vielzahl metallischer Schichten in einer Spule (64); und
Verankern der Spule an dem Abschnitt.

## Revendications

1. Carter de confinement (60) pour un moteur de turbine présentant une pluralité de pales (48, 50, 52) tournant dedans, ledit carter de confinement comprenant :
une première pluralité de couches métalliques à relativement haute résistance (74), chacune de ladite première pluralité de couches étant résistante à la pénétration de fragments au travers de celles-ci ; et
une seconde pluralité de couches métalliques relativement ductiles (76), chacune de ladite seconde pluralité de couches étant configurée pour absorber de l'énergie cinétique de fragments frappant ladite seconde pluralité de couches,
dans lequel ladite première pluralité de couches métalliques et ladite seconde pluralité de couches métalliques sont entrelacées l'une avec l'autre.

2. Carter de confinement selon la revendication 1, comprenant en outre une base (66), sur laquelle ladite première et seconde pluralité de couches sont agencées.

3. Carter de confinement selon la revendication 2, comprenant en outre un premier anneau (68) agencé sur une première extrémité (70) de ladite base, sur laquelle ladite première et seconde pluralité de couches sont agencées ; de préférence
comprenant en outre un second anneau (68) agencé sur une seconde extrémité (70) de ladite base, sur laquelle ladite première et seconde pluralité de couches sont agencées de sorte que ladite base et lesdits premier et second anneaux forment une bobine.

4. Carter de confinement selon une quelconque revendication précédente, comprenant en outre un boîtier, dans lequel des pales tournent et dans lequel lesdites première et seconde couches sont agencées autour de celles-ci.

5. Carter de confinement selon une quelconque revendication précédente, dans lequel chaque couche de ladite première et seconde pluralité de couches est comprise entre 0,3 mm et 2,5 mm d'épaisseur.

6. Procédé de montage de couches (72) qui résistent à la pénétration d'une pale (48, 50, 52) ou partie de celle-ci au travers et absorbent l'énergie cinétique de celle-ci, ledit procédé comprenant :
la fourniture d'une première pluralité de couches métalliques à résistance relativement élevée (74), chacune de ladite première pluralité de couches étant résistante à la pénétration de pales au travers ; et
l'entrelacement d'une seconde pluralité de couches métalliques relativement ductiles (76) avec ladite première pluralité de couches métalliques, chacune de ladite seconde pluralité de couches absorbant de l'énergie cinétique de pales frappant l'une quelconque de ladite seconde pluralité de couches.

7. Procédé selon la revendication 6, comprenant en outre :
la fourniture d'une base (66), sur laquelle ladite première pluralité de couches métalliques et ladite seconde pluralité de couches métalliques sont agencées.

8. Procédé selon la revendication 7, comprenant en outre :
l'attache de chacune de ladite première pluralité de couches métalliques et chacune de ladite seconde pluralité de couches métalliques à elle-même pour former un anneau et le placement dudit anneau sur ladite base.

9. Procédé selon la revendication 7, comprenant en outre :
l'attache d'une première extrémité de chacune de ladite première pluralité de couches métalliques et ladite seconde pluralité de couches métalliques à une seconde extrémité de celle-ci pour former un anneau sur ladite base.

10. Procédé selon la revendication 7, comprenant en outre la fourniture d'un premier anneau (68) sur une première extrémité (70) de ladite base ; de préférence comprenant en outre :
l'attache de chacune de ladite première pluralité de couches métalliques et ladite seconde pluralité de couches métalliques à elle-même pour former un anneau ; et
le placement dudit anneau sur ladite base à proximité dudit premier anneau ; et de manière davantage préférée comprenant en outre :
le placement d'un second anneau (68) sur une seconde extrémité de ladite base de sorte que ladite base et ledit premier et second anneau forment une bobine (64).

11. Procédé selon la revendication 7, comprenant en outre :
l'attache d'une première extrémité d'une de ladite première pluralité de couches métalliques et ladite seconde pluralité de couches métalliques à une seconde extrémité d'une autre de ladite première pluralité de couches métalliques et ladite seconde pluralité de couches métalliques pour former une bande ; et
l'enroulement de ladite bande sur ladite base.

12. Procédé selon la revendication 11, comprenant en outre l'attache d'une première extrémité de ladite bande à ladite base ; de préférence
comprenant en outre l'attache d'une seconde extrémité de ladite bande à ladite base.

13. Procédé de montage d'un anneau de confinement sur une partie d'un moteur (10), dans laquelle est agencée une pale de rotation qui peut casser ou se fragmenter, comprenant :
le montage de couches par un procédé selon l'une quelconque des revendications 6 à 12 ; et
l'agencement de ladite première pluralité de couches métalliques et ladite seconde pluralité de couches métalliques autour de ladite partie.

14. Procédé selon la revendication 13, comprenant en outre l'ancrage de ladite première pluralité de couches métalliques et ladite seconde pluralité de couches métalliques à ladite partie.

15. Procédé selon la revendication 13 ou 14, comprenant en outre :
l'agencement de ladite première pluralité de couches métalliques et ladite seconde pluralité de couches métalliques dans une bobine (64) ; et
l'ancrage de ladite bobine à ladite partie.
